# EUROPEAN PATENT APPLICATION

(11) **EP 1 601 198 A1**
(43) Date of publication of application: **30.11.2005**
(21) Application number: 05253216.5
(22) Date of filing: 25.05.2005
(51) Int. Cl.: H04N 7/173

(54) **Data reproduction apparatus, information distribution server, and content reproduction system**

(30) Priority: 28.05.2004 JP 2004159983
(71) Applicant: SONY CORPORATION, Tokyo (JP)
(72) Inventor: Miyajima, Yasushi, c/o Sony Corporation, Tokyo (JP); Asukai, Masamichi, c/o Sony Corporation, Tokyo (JP); Takai, Motoyuki, c/o Sony Corporation, Tokyo (JP); Inoue, Makoto, c/o Sony Corporation, Tokyo (JP); Shirai, Katsuya, c/o Sony Corporation, Tokyo (JP); Makino, Kenichi, c/o Sony Corporation, Tokyo (JP)
(74) Representative: Nicholls, Michael John

(57) **Abstract**

The present invention provides a data reproduction apparatus than can effectively utilize a display screen which is not used. The data reproduction apparatus includes a reproduction section that reproduces content, an identification information acquisition section that acquires information to identify the content, a transmission section that transmits the information acquired in the identification information acquisition section and information unique to the data reproduction apparatus to an information distribution server on a network, a reception section that receives information that the information distribution server has selected based on the information to identify the content and information unique to the data reproduction apparatus, and a control section that presents the information received by the reception section in sync with the content to be reproduced by the reproduction section.

## Description

The present invention contains subject matter related to Japanese Patent Application JP 2004-159983 filed in Japanese Patent Office on May, 28, 2004, the entire contents of which being incorporated herein by reference.

The present invention relates to a data reproduction apparatus, information distribution server, and content reproduction system and, more particular, to a data reproduction apparatus that receives information related to reproduction content from an information distribution server and displays the information in sync with the content at the time of reproducing content recorded on a disc recording medium, an information distribution server that distributes information related to reproduction content, and a content reproduction system constituted by the data reproduction apparatus and information distribution server.

In recent years, along with the popularization of a large capacity recording medium such as DVD (Digital Versatile Disc) or CD (Compact Disc) having a main aim of reproducing video and audio data, a video/audio reproduction system, represented by so-called a home theater, capable of reproducing higher quality video/audio space has been widely prevalent at home in addition to an audio reproduction apparatus having a main object of reproducing music content.

Among various types of the video/audio reproduction systems, each constituting the above home theater, there is available a multimedia apparatus capable of reproducing a plurality of recording media such as DVD or CD and executing a game program recorded in DVD or CD. Such a multimedia apparatus has a DVD- CD- reproduction function as well as a function of storing video and audio content in a large capacity HDD (Hard Disc Drive). In general, the multimedia apparatus uses an external display apparatus such as a TV set or liquid crystal display unit as a display means.

In many multimedia apparatus, when the recording medium storing, in particular, only music content is reproduced, nothing is displayed on the display unit, or only a track number, an operation GUI (Graphical User Interface), or background image of VOD (Video On-Screen Display) is displayed on the display unit since video data is not included in the reproduction data of the music content. Therefore, even if the user's object is merely to enjoy music, atmosphere or user's feeling may be damaged due to a bleak image on the display unit.

To cope with this, there is available a technique that displays an image generated from a spectrum such as rhythm of music or beat strength using software called visualizer. However, the image generated by the visualizer is obtained by changing a part of a prepared base image using a parameter included in music data. Thus, even when the user intends to select a desirable display image in accordance with the atmosphere of the music, he or she cannot find a desirable one in the prepared base images in some cases.

An apparatus capable of being connected to a database on a network as well as reproducing music content has been proposed. In addition, a technique capable of acquiring information related to a reproduction medium from a database on a network using TOC (Table of Contents) information of a recording medium that is being reproduced and information indicating the content in the disc as identification information has been disclosed (for example, refer to Jpn. Pat. Appln. Laid-Open Publication No. 2000 331468).

Accordingly, it is desirable to provide a data reproduction apparatus capable of effectively utilizing a display screen which is not used by some contents to be reproduced, an information distribution server capable of distributing information related to content whose reproduction is in progress to the data reproduction apparatus, and a content reproduction system capable of distributing information related to content whose reproduction is in progress to the data reproduction apparatus that is reproducing the content to allow the information to be displayed in the display screen which is not used by some contents to thereby effectively utilize the display screen.

According to the present invention, there is provided a data reproduction apparatus including: a reproduction means for reproducing content recorded on a recording medium; an identification information acquisition means for acquiring information to identify the content that is reproduced by the reproduction means; a transmission means for transmitting the information acquired in the identification information acquisition means and information unique to the data reproduction apparatus to an information distribution server on a network; a reception means for receiving information that the information distribution server has selected based on the information to identify the content and information unique to the data reproduction apparatus; and a display control means for presenting the information received by the reception means in sync with the content to be reproduced by the reproduction means.

With the above configuration, the data reproduction apparatus extracts information to identify content from a corresponding reproduced content, transmits the extracted information and information unique to the data reproduction apparatus to the information distribution server on a network, receives information selected in the information distribution server, and displays the received information in sync with the content to be reproduced by the reproduction means. The information received by the reception means may include advertisement information or commodity information related to the content to be reproduced by the reproduction means.

According to the present invention, there is also provided an information distribution server including: an information accumulation means in which information provided in accordance with information to identify content recorded on a recording medium is stored; a reception means for receiving the information to identify the content extracted from the recording medium reproduced in a data reproduction apparatus on a network and information unique to the data reproduction apparatus through the network; an information selection means for selecting information to be provided from the information accumulation means based on the information to identify the content and information unique to the data reproduction apparatus that the reception means has received; a transmission means for transmitting the information to be provided that the information selection means has selected to the data reproduction apparatus on a network.

With the above configuration, the information distribution server according to the present invention selects information to be provided to the data reproduction apparatus based on the content which is currently reproduced by the data reproduction apparatus and information unique to the data reproduction apparatus, and transmits thus selected information to the data reproduction apparatus.

Further, the control means may create a reproduction history of content in the data reproduction apparatus based on the information to identify the content received by the reception means and information unique to the data reproduction apparatus, and the information selection means may select information to be provided based on the reproduction history.

According to the present invention, it is possible to present video content or music content related to the content being reproduced using a display screen which is not used by some contents as in the case where music content is reproduced, to thereby effectively utilize the display screen.

Further, in the present invention, it is possible to create the reproduction history of the content in the data reproduction apparatus based on the information to identify the content and information unique to the data reproduction apparatus to select the information to be provided to users based on the reproduction history. For example, advertisement information or commodity information can be presented in accordance with the number of times of reproduction, type of the content to be reproduced.

The invention will now be described with reference to the following nonlimiting drawings:
FIG. 1 is a view showing the configuration of a video image distribution system;
FIG. 2 is a block diagram showing the configuration of a music reproduction apparatus;
FIG. 3 is a view showing the software configuration of a video image acquisition application;
FIG. 4 is a flowchart for explaining the operation of a video image request section;
FIG. 5 is a block diagram showing the configuration of a video image distribution server;
FIG. 6 is a flowchart for explaining the operation of a video image selection section;
FIG. 7 is a view schematically showing an audio data extraction method;
FIG. 8 is a view showing the configuration of an apparatus profile storage section;
FIG. 9 is a view showing the configuration of a reproduction history storage section;
FIG. 10 is a view showing the configuration of a video image data storage area storage section;
FIG. 11 is a view showing the configuration of a user information storage section; and
FIG. 12 is a flowchart for explaining the operation of the video image distribution system.

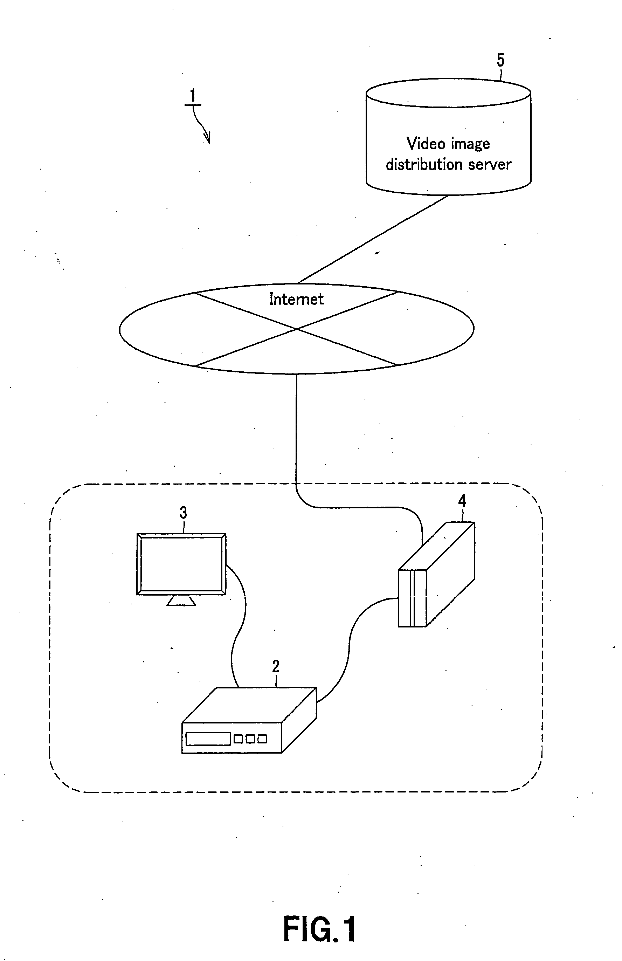

A video image distribution system 1 according to the present invention will be described below with reference to the accompanying drawing. FIG. 1 schematically shows the video image distribution system 1. A music reproduction apparatus 2 is a multi-disc player capable of reproducing a plurality of types of optical discs, such as DVD on which moving image data is recorded or CD (Compact Disc) on which music data is recorded. A display 3 is connected to the music reproduction apparatus 2. The music reproduction apparatus 2 can be connected to the Internet through a router 4. A video image distribution server 5 exists on the Internet. The music reproduction apparatus 2 transmits identification information related to the music that the apparatus 2 is reproducing to the video image distribution server 5. The video image distribution server 5 distributes a video image best suited to the music being reproduced.

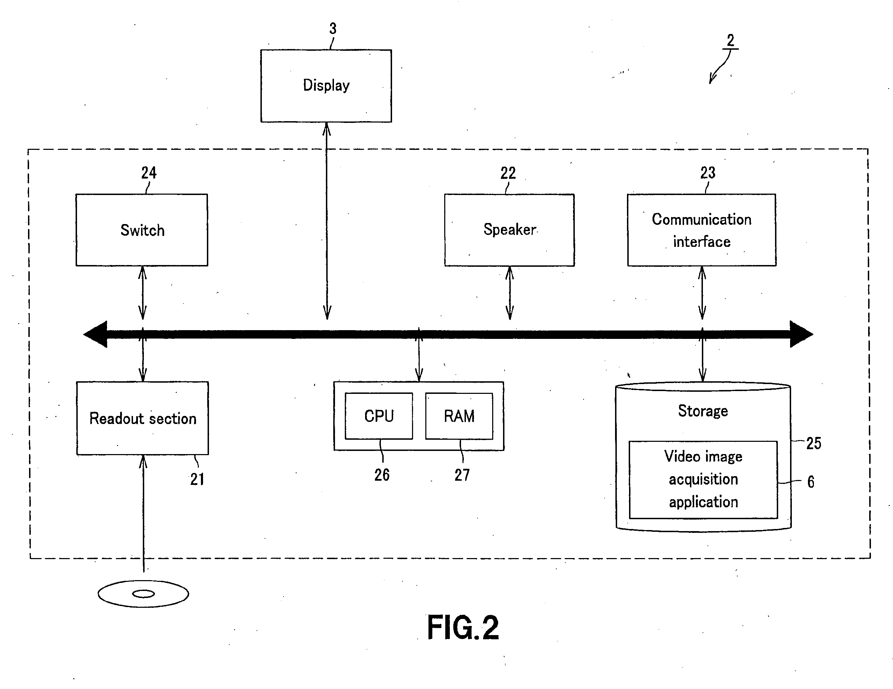

The configuration of the music reproduction apparatus 2 will be described with reference to FIG. 2. The music reproduction apparatus 2 includes: a readout section 21 to read out information on CD or DVD; a speaker 22 to output audio; a communication interface 23 to relay data between components of the apparatus 2 using a physical transmission path; a switch 24 to receive an input instructing the stop of reproduction or the like; a storage 25 to store a program or setting information; a CPU 26 to process the program stored in the storage 25; and a RAM 27 to serve as a work area of the CPU 26. The music reproduction apparatus 2 is connected to a display 3 or a unit provided with the display 3. Examples of the unit provided with the display 3 include a TV, a personal computer, and the like.

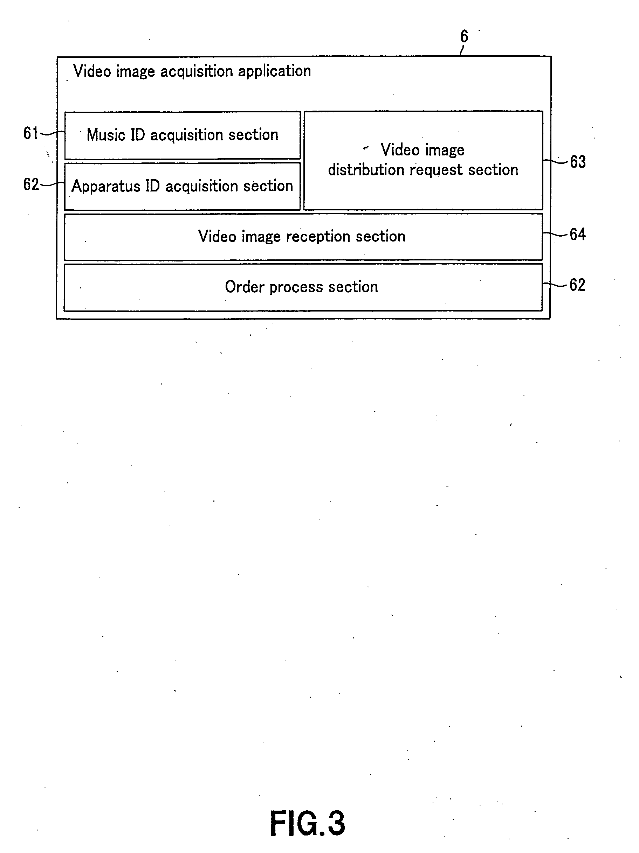

The storage 25 stores a video image acquisition application 6 for allowing the CPU 26 to execute processes according to the present invention. FIG. 3 shows the software configuration of the video image acquisition application 6. The video image acquisition application 6 includes: a music ID acquisition section 61 to acquire the ID of the music recorded on CD; an apparatus ID acquisition section 62 to acquire the ID of the music reproduction apparatus 2; a video image distribution request section 63 to request the video image distribution server 5 to distribute a video image; a video image reception section 64 to apply data alignment and decode process to the video image received from the video image distribution server 5; and an order process section 65 to make an order for an advertisement attached to the video image.

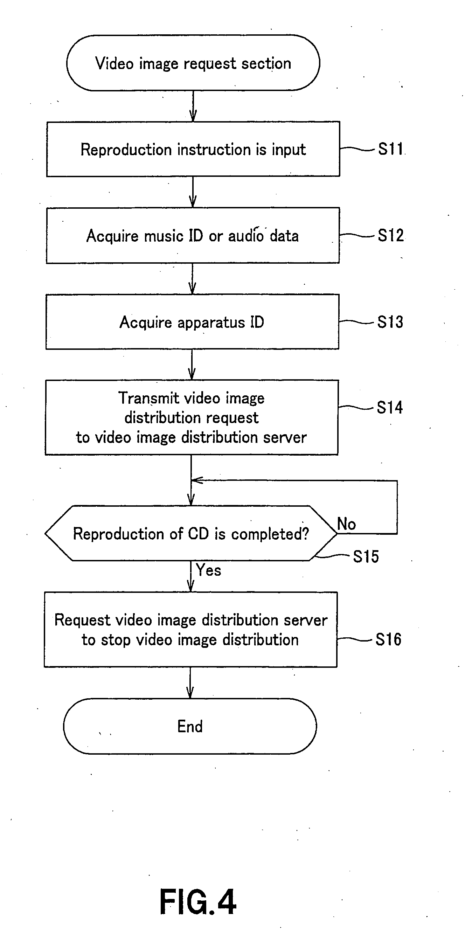

The video image distribution request section 63 outputs a video image distribution request and distribution stop request to the video image distribution server 5. The video image distribution request section 63 transmits the video image distribution request upon reproduction start of CD and transmits the distribution stop request when the reproduction of CD is stopped. The video image distribution server 5 distributes a video image suited to the music on CD during the reproduction of CD. FIG. 4 shows a process flow from the start of the video image distribution operation of the server 5 to the end thereof. When an instruction to start reproducing CD is issued by the user (step S11), the video image distribution request section 63 acquires music ID or audio data from the music ID acquisition section 61 (step S12) and acquires apparatus ID from the apparatus ID acquisition section 62 (step 13). The video image distribution request section 63 then creates video image distribution request information including the music ID and apparatus ID and transmits the created information to the video image distribution server 5 (step S 14). When the reproduction of CD is stopped, that is, when an instruction to stop reproducing CD is issued or when reproduction of all music recorded on CD is completed (Yes in step S15), the video image distribution request section 63 requests the video image distribution server 5 to stop the video image distribution operation (step S16). During the reproduction of CD (No in step S15), the video image distribution request section 63 does not perform any particular process.

The music ID acquisition section 61 searches music ID described in CD. The music ID is recorded in TOC (Table Of Contents) subcode in CD. The subcode is non-audio data parts between which audio data is interposed. The subcode includes time information, UPC/EAN code, ISRC (International Standard Recording Code). The subcode also includes CDTEXT and identification information for each music data.

If the abovementioned music ID is not described in CD, the video image distribution request section 63 reads out a part of audio data and reproduction time information of the music. The read out audio data is transmitted to the video image distribution server 5. The video image distribution server 5 creates music ID from the transmitted audio data. A method for creating the music ID will be described later.

The apparatus ID acquisition section 62 acquires apparatus ID of the music reproduction apparatus 2. The apparatus ID is a unique ID that specifies an apparatus. MAC (Media Access Control) address of the communication interface 23 can be taken as an example of the apparatus ID.

The video image reception section 64 takes out video image data from packets and aligns divided video image data based on sequence number or time stamp described in packet header. The video image reception section 64 decodes the aligned video image data to convert it into video image data capable of being displayed on a display.

The order process section 65 receives a user's purchase instruction for the advertisement information attached to a video image and transmits order information including the name, number, desired delivery date of the corresponding commodity and the like to the video distribution server 5. Note that the commodity mentioned here includes information exchanged through a network.

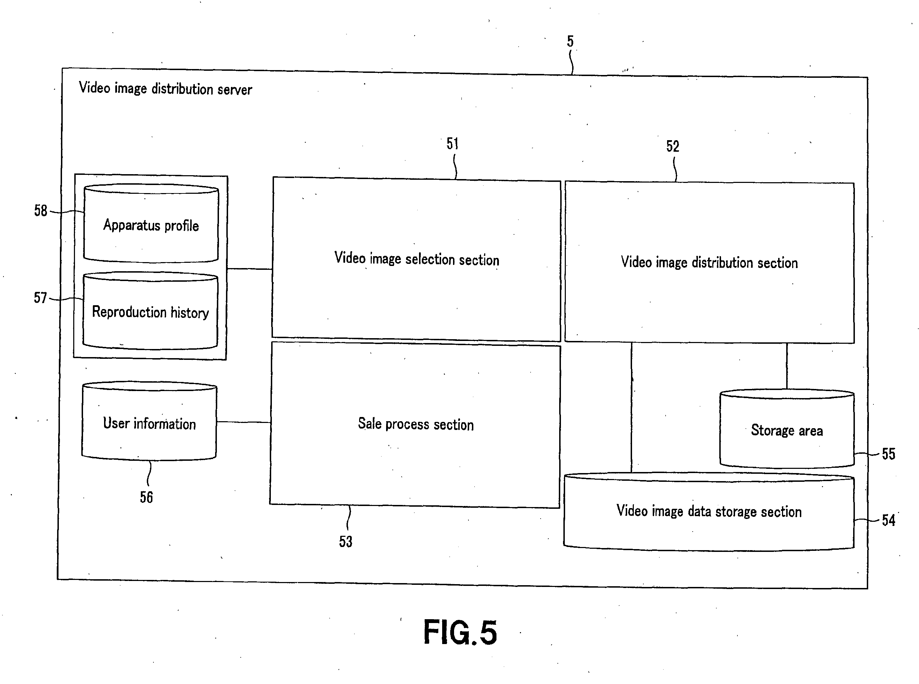

The configuration of the video image distribution server 5 will next be described with reference to FIG. 5. The video image distribution server 5 includes: a video image selection section 51 to select a video image; a video image distribution section 52 to distribute the selected video image; a sale process section 53 to sell the ordered commodity; a video image data storage section 54 to store vide data; a video image data storage area storage section 55 to link video image ID to the storage location of corresponding video image data; a user information storage section 56 to store user's personal information; a reproduction history storage section 57 to store the reproduction history of music; and an apparatus profile storage section 58 to allow a link between the apparatus ID, user's personal information, and reproduction history of music.

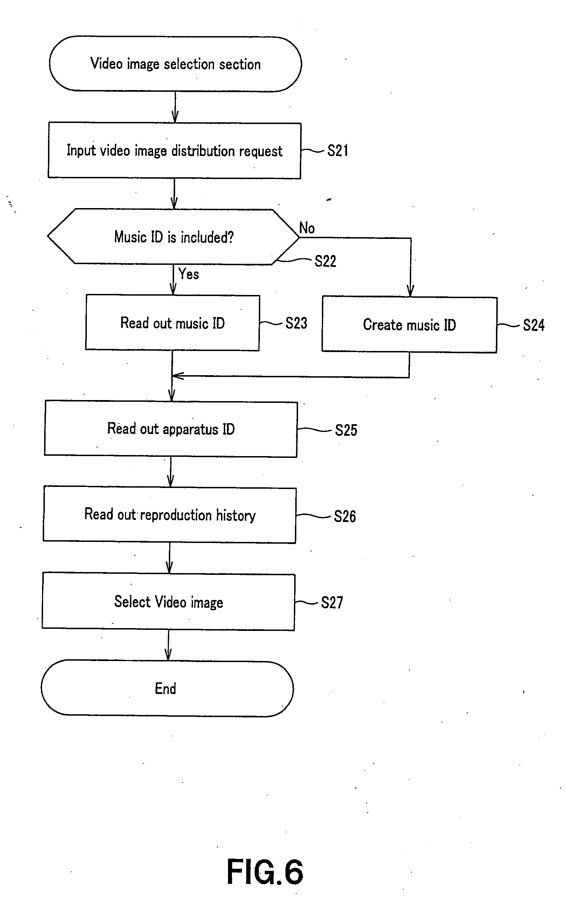

The video image selection section 51 selects video image data to be distributed to the music reproduction apparatus 2. FIG. 6 shows a process flow of the video image selection section 51. The video image selection section 51 firstly inputs the video image distribution request information from the music reproduction apparatus 2 (step S21). When music ID is included in the video image distribution request information (Yes in step S22), the video image selection section 51 reads out the music ID (step S23). This music ID is the identification information of the music being reproduced by the music reproduction apparatus 2.

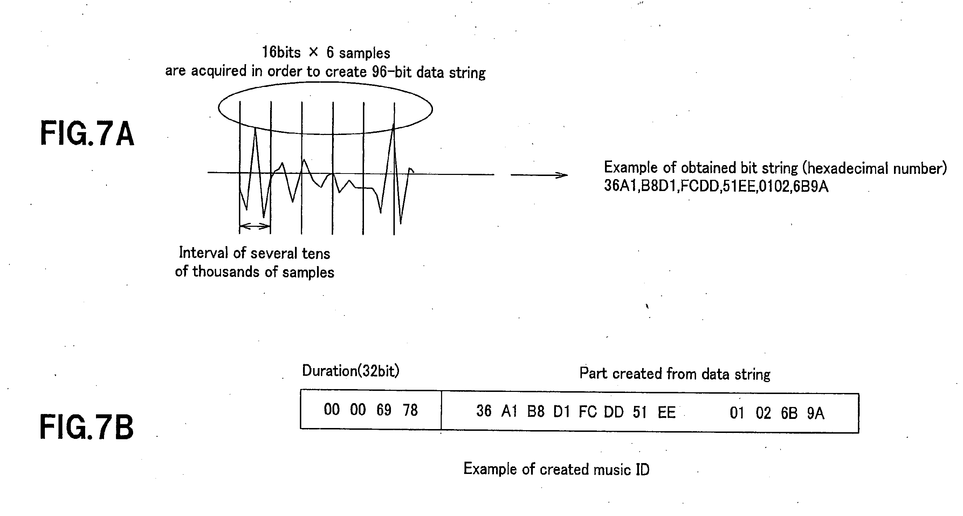

When audio data is included in place of the music ID (No in step S22), the video image selection section 51 reproduces music data from the audio data. An example of a method for reproducing the music data will be described. In this example, a combination of audio data is used. The data of music CD includes digital data string that has been quantized to 16 bits as shown in FIG. 7A. The video image selection section 51 extracts some numerical values from the data string and applies computation to the extracted numerical values to obtain numerical values of a particular bit number. The video image selection section 51 regards the data obtained by adding the reproduction time information of the music to the numerical values of a particular bit number as music ID. In this method, the probability that the same music ID may be created from different music is not 0. However, the music ID creation accuracy can be increased by increasing the extracted bit number. A bit number ranging from 128 to 256 bits will suffice from a practical standpoint. Further, there exists a silent part at the beginning of music in the case of noncompressed data string like PCM (Pulse Coded Modulation) data. When the silent part is included in the computation of the music ID, the obtained ID value may be biased to increase the probability that the same music ID may be created from different music. Therefore, the data not more than a certain threshold is not used for the computation. On the other hand, when the audio data has been compressed, the audio data can directly be used for the computation of the music ID.

The music ID shown in FIG. 7B is 128-bit-length. The leading 32-bit represents reproduction time (Duration) and the residual 96-bit is the part that has been created. In the case of audio data, there is little variation between consecutive data blocks and similar numerical sequence appears in short time length. Therefore, the data string is created by extracting numerical values every several tens of thousands of samples, such as 10,000 or 44,100 samples, that is, data is acquired discretely to further reduce the probability that the music ID is overlapped between different music (step S24).

The video image selection section 51 then reads out apparatus ID included in the video image distribution request. The apparatus ID is global unique ID uniquely added to the music reproduction apparatus 2. MAC address of the communication interface 23 can be taken as an example of the apparatus ID. The apparatus ID can be added by the manufacturer of the music reproduction apparatus 2 (step S25).

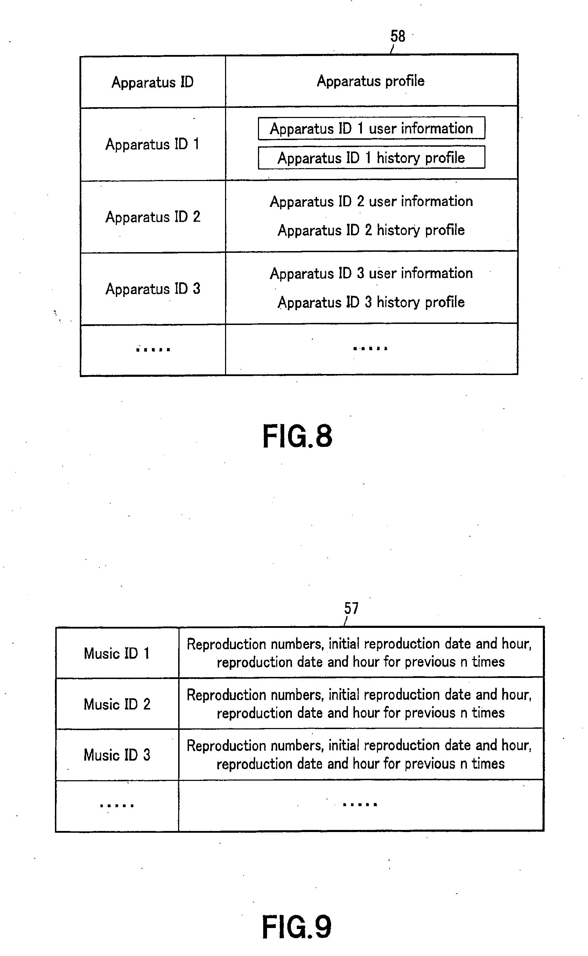

The video image selection section 51 searches the apparatus profile storage section 58 using the apparatus ID as a key. The apparatus profile storage section 58 forms a relation between the apparatus ID and reproduction history as shown in FIG. 8. The video image selection section 51 reads out the reproduction history corresponding to the apparatus ID from the apparatus profile storage section 58. The reproduction history includes, as shown in FIG. 9, number of times of reproduction for each music ID, initial reproduction date and hour, previous reproduction date and hour (step S26).

The video image selection section 51 selects a video image based on the music ID of the music currently being reproduced, contents of the reproduction history, current reproduction time and the like. The video image that the video image selection section 51 selects includes a privileged video image or advertisement video image. The privileged video image is provided as a service to users that have purchased CD. The value of the CD itself is increased by the distribution of the privileged video image. The advertisement video image includes, for example, a promotion video image of another artist or that of a newly released song or concert of user's favorite artist. As a promotion of a newly released song, a privilege that only users that have purchased the previous CD can purchase the newly released song before its released date may be effective. The user's order for the advisement video image can be made through a network. Since being made to meet the user's taste, the distribution of the advertisement video image is more effective than that of TV advertisement or the like directed to the general public. Further, the video image selection section 51 selects video image data based on the date and hour when the CD has been reproduced, so that information can be distributed timely. Further, the video image selection section 51 counts the number of times of the reproduction of each music and selects a different video image based on the reproduction numbers to prevent the same video image from being distributed a number of times. Further, the video image selection section 51 attaches additional information in accordance with the hour when the CD is to be reproduced. For example, when the CD is reproduced as an eye-opener in the morning, the video image selection section 51 adds today's weather information or news (step S27).

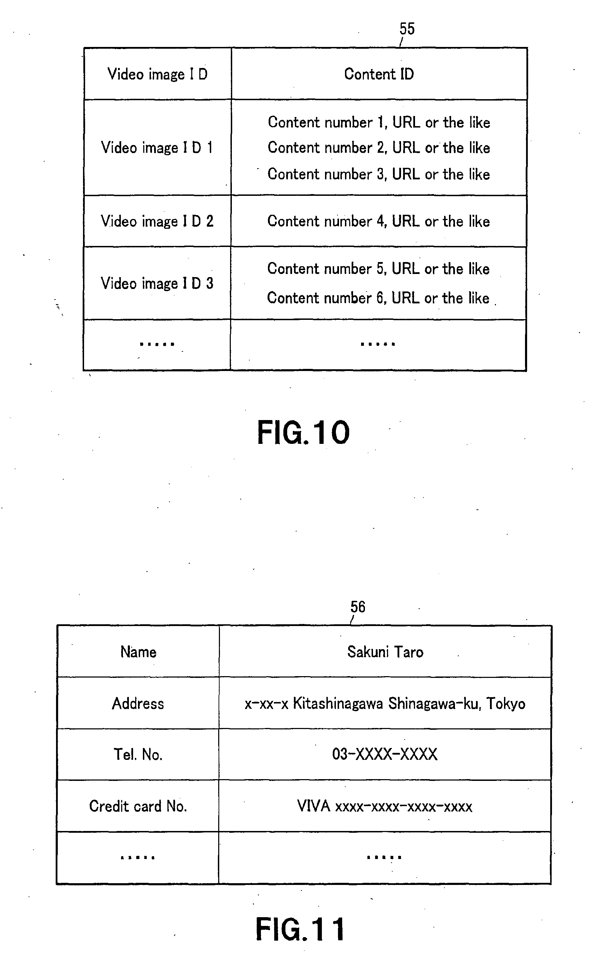

The video image distribution section 52 reads out the video image data selected by the video image selection section 51 from the video image data storage section 54 and distributes the video image data to the music reproduction apparatus 2. The storage location of the video image data is stored in the video image data storage area storage section 55 shown in FIG. 10. The video image data storage area storage section 55 links the video image ID to storage location of the video image data. The video image distribution section 52 is a streaming server. The video image distribution section 52 encodes video image data with a predetermined CODEC, creates a distribution stream from the encoded video image data, and distributes the video image data to the music reproduction apparatus 2. The streaming is started simultaneously with the reproduction of CD and is ended with the stop of the reproduction of CD. The video image distribution section 52 detects the start of the reproduction of CD by detecting the video image distribution request from the music reproduction apparatus 2 and detects the stop of the reproduction of CD by detecting the distribution stop request from the same.

When receiving order information from the music reproduction apparatus 2, the sale process section 53 searches the apparatus profile storage section 58 using apparatus ID as a key. The apparatus profile storage section 58 forms a relation between the apparatus ID and user information as shown in FIG. 8. The user information includes, as shown in FIG. 11, user's private information such as user's address, name, telephone number, and credit card number. The sale process section 53 issues an instruction related to charge of the ordered commodity to a credit card-company and performs a delivery process of the ordered commodity to registered address. The sale process section 53 receives orders only while the streaming is distributed, that is, while CD is being reproduced. As a result, the value of the commodity is increased. Further, the user reproduces CD a number of times in order to obtain a particular commodity, thereby increasing the utilization ratio of the video image distribution server 5.

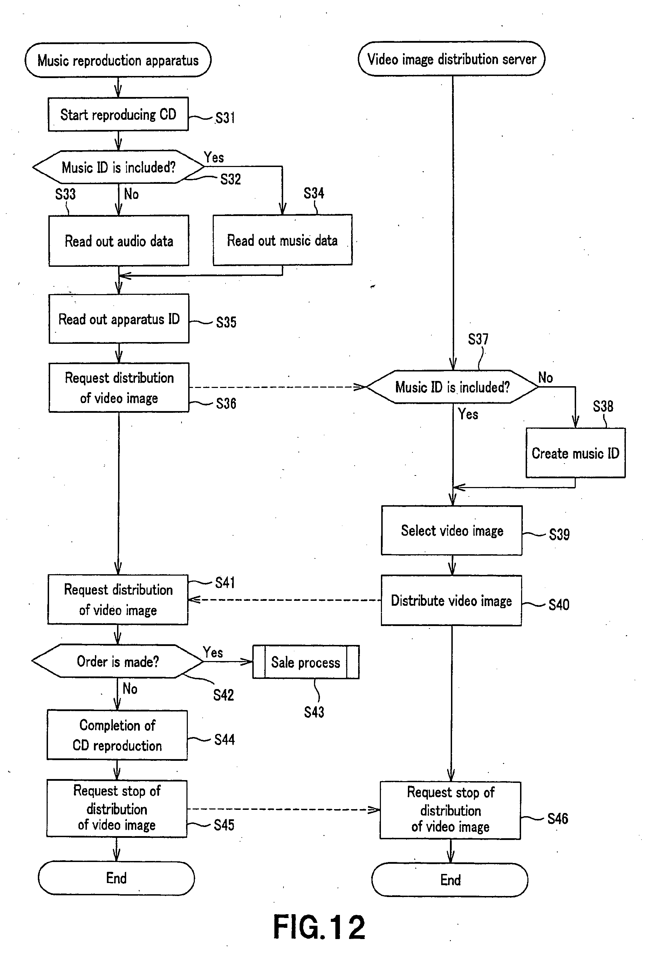

The operation of the video image distribution system 1 having the above configuration will next be described with reference to the flowchart of FIG. 12. When CD is inserted into the music reproduction apparatus 2 and the reproduction switch 24 is selected, the music reproduction apparatus 2 starts reproducing the CD (step S31). The music ID acquisition section 61 of the music reproduction apparatus 2 then searches the music ID in the CD. When the music ID is not recorded in the CD (No in step S32), the music ID acquisition section 61 reads out audio data and the reproduction time information (step S33). When the music ID is recorded in the CD (Yes in step S32), the music ID acquisition section 61 reads out the music ID (step S34). Then, the apparatus BD acquisition section 62 reads out the apparatus ID uniquely added thereto (step S35).

The video image distribution request section 63 creates music ID or audio data and video image distribution request information including the apparatus ID and transmits them to the video image distribution server 5 (step S36). When music ID is not included in the video image distribution request information (No in step S37), the video image content selection section of the video image distribution server 5 creates the music ID based on the audio data and reproduction time information (step S38).

The video image selection section 51 then selects a video image based on the music ID of the music being currently reproduced, user's reproduction history, current date and hour and outputs the video image ID of the selected video image to the video image distribution section 52 (step S39). The video image distribution section 52 reads out video image data corresponding to the received video image ID, converts the read out video image data into stream data, and transmits the converted data to the music reproduction apparatus 2 (step S40).

The video image reception section 64 of the music reproduction apparatus 2 converts the stream data into video image data for display and outputs it to the display 3 (step S41). When the video image data is advertisement video image and a user makes an order for the advertisement (Yes in step S42), the order process section 65 of the music reproduction apparatus 2 transmits the order information to the video image distribution server 5 and the sale process section 53 of the video image distribution server 5 that has received the order performs sale process for the ordered commodity (step S43).

When the user has not made an order (No in step S42), the image being reproduced continues being displayed until CD is stopped. When the stop switch 24 is selected by the user or all the music on CD have been reproduced, the readout of CD is stopped (step S44). When detecting the stop of the readout of CD, the video image distribution request section 63 transmits stop request of the video image distribution to the video image distribution server 5 (step S45). Then, the video image distribution section 52 of the video image distribution server 5 stops the distribution of a video image (step S46).

As described above, the video image distribution system 1 according to the present invention distributes the video image suited to the music being reproduced to the music reproduction apparatus 2 through a network while the music reproduction apparatus 2 reproduces CD which is music recording medium.

The video image distribution server 5 creates the reproduction history such as the music ID and reproduced date and hour related to the music that has been reproduced by the user and selects image data based on the music ID and reproduction history related to the music being reproduced. By referring to the reproduction history, it is possible to reliably analyze user's taste as compared to the case where the selection of the video image is made based only on the music ID.

The video image distribution server 5 distributes a video image only while CD is reproduced. That is, the user cannot obtain the video image while CD is not reproduced. Therefore, additional value (video image) is added to CD, leading to good sales.

Further, the video image distribution server 5 can select a video image that is suited to the date and hour when CD is reproduced, so that it is possible to timely perform a promotion such as an announcement of a newly released song or concert.

Although the video image is distributed while CD is reproduced in the above embodiment, the present invention is applicable to the case where a medium, such as DVD-Video, storing both video and audio data is reproduced. In this case, video or audio data that is allowed to be reproduced only once after completion of the reproduction of DVD is distributed as privileged information or sub-picture information to be superposed on the video image is distributed.

Further, although the video image data storage section 54 is provided in the video image distribution server 5 in the above embodiment, the video image data storage section 54 may be provided in a contents holder other than the video image distribution server 5. A configuration is allowable in which the user's private information is not stored in the video image distribution server 5 but is transmitted from the music reproduction apparatus 2 to video image distribution server 5 every time an order is made. This configuration is effective in blocking leaks of the user's private information. When the user intends to avoid registration of the private information such as credit card number, he or she can transmit the private information such as address, telephone number, and name, to the video image distribution server so as to use cash payment procedure such as cash on delivery. If the user registers the private information in the music reproduction apparatus 2 at the time of purchasing a commodity, extra effort of inputting the private information for each order can be omitted. The input method of the private information is not especially limited. For example, the private information may be input to the music reproduction apparatus 2 directly using a software keyboard, or may be input through a personal computer connected to the apparatus 2.

Although music content recorded on CD is reproduced in the music reproduction apparatus 2 and a video image data is distributed from the video image distribution server 5 to the music reproduction apparatus 2 in the above embodiment, the present invention is not limited to this configuration but can be applied to various types of contents. For example, a configuration is possible in which video image content is reproduced in the reproduction apparatus 2, correspondingly audio data such as music, natural sound such as surf sound, or narration is distributed from the distribution server 5 to the reproduction apparatus 2, and the distributed audio data is reproduced as BGM. The content to be distributed from the video image distribution server 5 may include a motion picture, still picture, natural image, computer graphics, or text information such as a message.

Further, the content to be reproduced is not limited to those recorded on a recording medium such as CD or DVD, but can be audio or image data distributed through a network, audio broadcast, or TV broadcast. In the former case, the content to be reproduced is distributed through the communication interface 23 of the music reproduction apparatus 2 in FIG. 2, subjected to a decode process by the CPU 26 and RAM 27, and reproduced. In the latter case, the content to be reproduced is taken out by a reception section which is provided in place of the readout section 21. The reception section receives a broadcast wave and performs demodulation to reproduce the content.

It should be understood by those skilled in the art that various modifications, combinations, sub-combinations and alternations may occur depending on design requirements and other factors insofar as they are within the scope of the appended claims or the equivalents thereof.

## Claims

1. A data reproduction apparatus comprising:
reproduction means for reproducing content;
identification information acquisition means for acquiring information to identify the content;
transmission means for transmitting the information acquired in the identification information acquisition means and information unique to the data reproduction apparatus to an information distribution server on a network;
reception means for receiving information that the information distribution server has selected based on the information to identify the content and information unique to the data reproduction apparatus; and
control means for presenting the information received by the reception means in sync with the content to be reproduced by the reproduction means.

2. The data reproduction apparatus according to claim 1, wherein the content is music content.

3. The data reproduction apparatus according to either claim 1 or claim 2,
wherein the information that the information distribution server has selected based on the information acquired by the identification information acquisition means and information unique to the data reproduction apparatus is a video image content.

4. The data reproduction apparatus according to any one of the preceding claims,
wherein
the content is recorded on a recording medium, and
unique information is recorded, as information to identify the content, in the recording medium together with the content.

5. The data reproduction apparatus according to any one of the preceding claims,
wherein the information to identify the content is included in the content.

6. The data reproduction apparatus according to any one of the preceding claims,
wherein the information to be received by the reception means includes advertisement information or commodity information related to the content to be reproduced by the reproduction means.

7. An information distribution server comprising:
information accumulation means in which information provided in accordance with information to identify content is stored;
reception means for receiving the information to identify the content reproduced in a data reproduction apparatus on a network and information unique to the data reproduction apparatus through the network;
information selection means for selecting information to be provided from the information accumulation means based on the information to identify the content and information unique to the data reproduction apparatus that the reception means has received; and
transmission means for transmitting the information to be provided that the information selection means has selected to the data reproduction apparatus on a network.

8. The information distribution server according to claim 7, further comprising storage means for storing the information to identify the content and information unique to the data reproduction apparatus that the reception means has received as a reproduction history of the content in the data reproduction apparatus, wherein
the information selection means selects the information to be provided based on the reproduction history.

9. The information distribution server according to either claim 7 or claim 8,
wherein the content is a music content.

10. The information distribution server according to any one of claims 7 to 9,
wherein the information to be provided selected based on the information to identify the content and information unique to the data reproduction apparatus is a video image content corresponding to the content.

11. The information distribution server according to any one of claims 7 to 10,
wherein
the content is recorded on a recording medium, and
unique information is recorded, as information to identify the content, in the recording medium together with the content.

12. The information distribution server according to any one of claims 7 to 11,
wherein the information to identify the content is included in the content.

13. The information distribution server according to any one of claims 7 to 12,
wherein the information to be provided includes advertisement information or commodity information related to the content to be reproduced by the reproduction section.

14. A content reproduction system in which a data reproduction apparatus which reproduces content and an information distribution server are connected to each other through a network,
the data reproduction apparatus comprising:
reproduction means for reproducing content;
identification information acquisition means for acquiring information to identify the content;
transmission means for transmitting the information acquired in the identification information acquisition means and information unique to the data reproduction apparatus to an information distribution server;
reception means for receiving information that the information distribution server has selected based on the information to identify the content and information unique to the data reproduction apparatus; and
control means for presenting the information received by the reception means in sync with the content to be reproduced by the reproduction means,
the information distribution server comprising:
information accumulation means in which information provided in accordance with information to identify content is stored;
reception means for receiving the information to identify the content reproduced in a data reproduction apparatus and information unique to the data reproduction apparatus through the network;
information selection means for selecting information to be provided from the information accumulation means based on the information to identify the content and information unique to the data reproduction apparatus that the reception means has received; and
transmission means for transmitting the information to be provided that the information selection means has selected to the data reproduction apparatus.
